# EUROPEAN PATENT SPECIFICATION

(11) **EP 1 940 073 B1**
(45) Date of publication and mention of the grant of the patent: **12.04.2017**
(21) Application number: 06790995.2
(22) Date of filing: 14.09.2006
(51) Int. Cl.: H04L 9/08, H04L 9/32

(54) **A METHOD, SYSTEM AND APPARUS FOR NEGOTIATING THE KEY BETWEEN SS AND SP**
VERFAHREN, SYSTEM UND VORRICHTUNG ZUM AUSHANDELN DES SCHLÜSSELS ZWISCHEN SS UND SP
PROCEDE, SYSTEME ET APPAREIL DE NEGOCIATION DE CLE ENTRE SS ET SP

(30) Priority: 15.09.2005 CN 200510103472
(43) Date of publication of application: 02.07.2008
(73) Proprietor: Huawei Technologies Co., Ltd., Longgang District Shenzhen, Guangdong 518129 (CN)
(72) Inventor: YANG, Yanmei, Shenzhen Guangdong 518129 (CN)
(74) Representative: Pfenning, Meinig & Partner mbB
(86) International application number: PCT/CN2006/002392
(87) International publication number: WO 2007/031027

(56) References cited:
- CN-A- 1 455 556
- CN-A- 1 456 993
- JP-A- 2005 229 489
- US-A1- 2004 111 600
- US-A1- 2004 230 801
- XU Z. ET AL.: 'THEORIES AND TECHNIQUES FOR ESTABLISHING CERTIFICATE AUTHORITY' COMPUETR ENGINEERING AND APPLYING September 2003, pages 87 - 89

## Description

### Field of the Invention

The present invention relates to the field of 3GPP Generic Authentication Architecture (GAA), and more particularly, to a method, system, and apparatus for negotiating a key shared between a Service Subscriber Entity and a Service Provider Entity.

### Background of the Invention

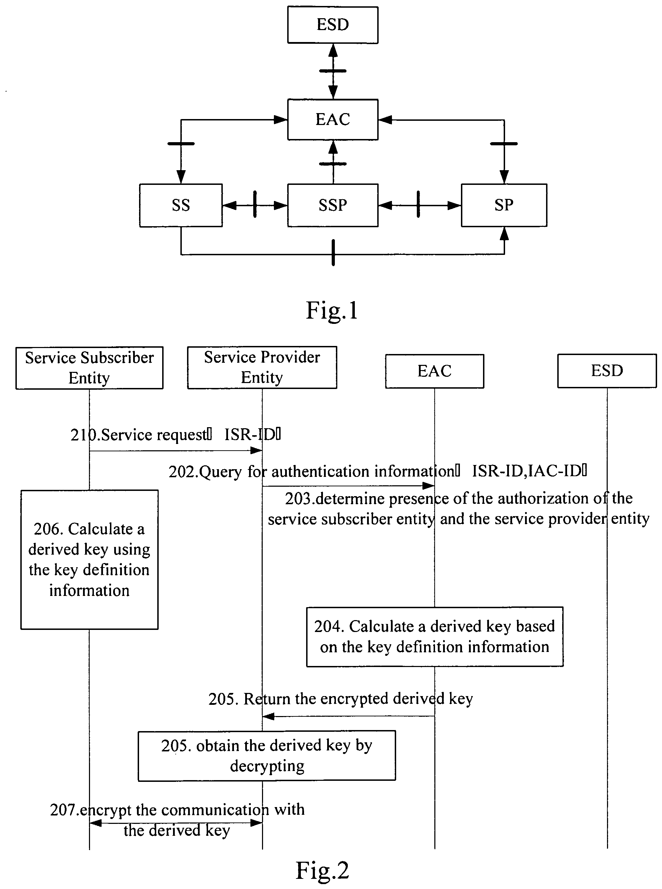

Figure 1 is shows a schematic diagram of GAA. GAA includes a service subscriber (SS), a service provider (SP), a service subscriber/provider (SSP), an Entity Authentication Center (EAC), and an Entity Subscription Database (ESD). In this application, unless otherwise specified, a Service Subscriber Entity may be an SS or an SSP, and a Service Provider Entity may be an SP and an SSP.

Before communicating with any other entity, a service entity (SS, SSP, or SP) firstly acts as an Authentication Request Entity to send an authentication request to the EAC, with an identity of the service entity being carried in the authentication request.

After receiving the authentication request, the EAC selects an authentication mode according to the policy stored locally and the subscription information of the service entity, and return the information about the authentication mode to the Authentication Request Entity.

Then, the Authentication Request Entity and the EAC initiate mutual authentication in the authentication mode. When the authentication is completed successfully, a shared key is established between the service entity that acts as the Authentication Request Entity and the EAC. Then the EAC assigns a temporary identity and a corresponding period of validity for the service entity based on the subscription information. In the present application, if the service entity is an SS, the assigned temporary identity is an Intermediate Service Request identity (ISR-ID), and the key shared between an SS and an EAC is called Kss; if the service entity is an SP, the assigned temporary identity is an Intermediate Application Component identity (IAC-ID), and the key shared between an SP and an EAC is called Ksp; if the service entity is an SSP, the assigned temporary identity includes ISR-ID and IAC-ID, and the key shared between the SSP and the EAC is called Kssp.

Then, the EAC returns the temporary identity and the period of validity to the authentication request entity; and the shared key generated by the EAC may be used to protect the communication between the authentication request entity and the EAC.

When a Service Subscriber Entity (SS or SSP) initiates a communication with a Service Provider Entity (SP or SSP), the communication is secured using a derived key derived from the shared key (Kss or Kssp) negotiated between the Service Subscriber Entity (SS or SSP) and the EAC. The generation of the derived key will be described in detail below.

The Service Subscriber Entity sends a service request message to the Service Provider Entity, with the ISR-ID of the Service Subscriber Entity being carried in the service request message.

After the Service Provider Entity receives the service request message, if the Service Provider Entity has completed the authentication procedure at the EAC and obtained the IAC-ID, the Service Provider Entity sends an inquiring request message to the EAC to inquiry about authentication status of the Service Subscriber Entity, with the ISR-ID of the Service Subscriber Entity and the IAC-ID of the Service Provider Entity being carried in the inquiring request message.

After receiving the inquiring request, the EAC inquires the service authority of the Service Provider Entity and the Service Subscriber Entity according to the ISR-ID and the IAC-ID, respectively.

After the service authority of the Service Provider Entity and the Service Subscriber Entity is determined, the EAC calculates the derived key for security communication based on information related to the Service Subscriber Entity and the Service Provider Entity, the derived key is shared between the Service Subscriber Entity and the Service Provider Entity. For the convenience of description, if the Service Provider Entity is an SSP, the derived key is denoted as K-SSP; if the Service Provider Entity is an SP, the derived key is denoted as K-SP. The parameters used in calculation of derived key include Private identity (PID) of the Service Subscriber Entity and the Unified identity (UID) of the Service Provider Entity.

The EAC sends the calculated derived key to the Service Provider Entity, with the sending process being encrypted and protected using the key shared between the Service Provider Entity and the EAC.

Furthermore, the Service Subscriber Entity calculates a derived key using the same parameters and algorithm with the EAC.

Then, the Service Subscriber Entity and the Service Provider Entity can initiates mutual authentication and secure the communication between them using the derived key.

GAA has a wide variety of applications and is applicable to the accesses of different service subscriber entities to different service provider entities. However, different Service Provider Entities may have different security level requirement, different security level requirement may require different derived key or different crypto algorithms used to generate the derived keys or different key lengths (for example, some derived keys may be 64-bits in length, while others may be 256-bits in length). It is, however, possible to generate undesirable keys by conventional key generation mechanisms due to the fact that they have not taken into account the above factors.

US Patent Publication No. US2004/0230801 A1 discloses a data processing device able to keep a technique for generation of the key data in a key generating means secret from a developer of an authentication means. The Key generating means generates the key data on the basis of the data received from the authentication means and providing the same to the authentication means. Wherein, the authentication means provides first data and second data to the key generation means, and the key generating means generates the key data by using only the first data in the first data and the second data received from the authenticating means.

Handbook of Applied Cryptography, Chapter 13, Key Management Techniques; Page 546-551 discloses a key access server which can providing shared keys under controlled access to individual members of groups of two or more parties.

### Summary of the Invention

It is therefore an object of the present invention to provide a method, system, and apparatus for negotiating a communication key shared between a Service Subscriber Entity and a Service Provider Entity, the communication key can be generated according to a specified security level requirement, and meet the security requirement of the service. This object is solved by the method according to claim 1, the system according to claim 9, the entity authentication center according to claim 13, the service subscriber entity according to claim 14 and their dependent claims.

The method for negotiating a communication key shared between a Service Subscriber Entity and a Service Provider Entity provided in the present invention includes:

by the Service Provider Entity, after receiving a service request message, sending an inquiring request message to an Entity Authentication Center (EAC), with the identity of the Service Provider Entity carried in the inquiring request message;

by the EAC, after receiving the inquiring request message, obtaining a key derivation rule information corresponding to a requested service, calculating a first derived key based on the obtained key derivation rule information using a first calculation method, and sending the calculated first derived key to the Service Provider Entity;

by the Service Subscriber Entity, calculating a second derived key using the same method as the first calculation method, based on the key derivation rule information corresponding to the requested service.

The present invention further provides a system for negotiating a communication key shared between a Service Subscriber Entity and a Service Provider Entity, including:
a key derivation rule information storage unit, adapted to store key derivation rule information corresponding to various services provided by the Service Provider Entity;
a key calculating unit, adapted to generate a first derived key based on the key derivation rule information corresponding to requested service;
a Service Provider Entity, adapted to send an inquiring request for the service requested by the Service Subscriber Entity to the EAC, in response to a service request from the Service Subscriber Entity;
an Entity Authentication Center (EAC), adapted to read the key derivation rule information from the key derivation rule information storage unit and provide the key derivation rule information to the key calculating unit, and adapted to receive the first derived key calculated by the key calculating unit and provide the first derived key to the Service Provider Entity; and
a Service Subscriber Entity, adapted to generate a second derived key based on the key derivation rule information.

The present invention further provides an EAC, including:
a key calculating unit, adapted to calculate a derived key for based on key derivation rule information corresponding to a service requested to the Service Provider Entity; and
a key negotiation processing unit, adapted to obtain the key derivation rule information corresponding to the requested service and provide the derivation rule information to the key calculating unit, and adapted to receive the derived key calculated by the key calculating unit and provide the derived key to the Service Provider Entity.

The present invention further provides a Service Subscriber Entity, including:
a service request module, adapted to sent a service request to a Service Provider Entity;
a key derivation rule information obtaining module, adapted to obtain the key derivation rule information corresponding to a requested service; and
a key calculating module, adapted to generate a derived key based on the key derivation rule information.

It can be seen from the above that, by using GAA architecture to negotiate the derived keys shared between a Service Subscriber Entity and a Service Provider Entity, the present invention may calculate proper keys according to the security requirement of the Service Provider Entity and the derived key generation algorithm supported by the Service Subscriber Entity. Specifically, the Service Subscriber Entity and the EAC may select appropriate algorithms to calculate proper derived keys according to the security requirement s of different services, including key lengths, derived key generation algorithms, and algorithms supported by the Service Subscriber Entity, etc.

In summary, the present invention realizes enhanced security of service communications and more flexible key selection. In addition, the present invention provides a variety of key generation algorithms, so that the GAA architecture has more applications.

### Brief Description of the Drawings

Figure 1 is a schematic diagram of GAA architecture;
Figure 2 is a flowchart for negotiating a derived key according to an embodiment of the present invention;
Figure 3 is a block diagram of a system for negotiating a communication key shared between a Service Subscriber Entity and a Service Provider Entity according to an embodiment of the present invention; and
Figure 4 is a block diagram of a system for negotiating a communication key shared between a Service Subscriber Entity and a Service Provider Entity according to another embodiment of the present invention.

### Detailed Description of the Embodiments

In the present invention, specific key derivation rule information is set for the security requirement of each service, and such information includes the algorithm for calculating the derived key and the length of the derived key to be generated, etc. The key derivation rule information can be stored in an ESD together with corresponding service provider subscription information. The key derivation rule information can be stored in a database specially arranged in the ESD, for storing the key derivation rule information of all kinds of services. The key derivation rule information can also be stored in subscription information, after a subscriber subscribes for a service. The ESD may further store the key generation algorithms supported by each Service Subscriber Entity. Accordingly, the Service Subscriber Entity may store security requirement information of subscribed service, and this information includes the key derivation rule information.

After the service entity and the EAC perform mutual authentication and generate shared keys, the EAC assigns a temporary identity to the service entity, when the Service Subscriber Entity (SS or SSP) initiates communication with the Service Provider Entity (SP or SSP), the communication between the Service Subscriber Entity (SS or SSP) and the Service Provider Entity may be secured using the derived keys derived from the shared key (Kss or Kssp) negotiated between the Service Subscriber Entity (SS or SSP) and the EAC. Figure 2 shows a method for negotiating the derived key according to an embodiment of the present invention.

Step 201: The Service Subscriber Entity sends a service request message to the Service Provider Entity, with the temporary identity, of the Service Subscriber Entity, such as ISR-ID, carried in the service request message.

Step 202: After receiving the service request message, the Service Provider Entity sends an inquiring request message to the EAC to inquiry authentication information of the Service Subscriber Entity, with the ISR-ID of the Service Subscriber Entity and a temporary identity, such as the IAC-ID of the Service Provider Entity (indicative of the presence of the inquiring authority) carried in the inquiring request message.

The inquiring request message may further include the key derivation rule information required by the Service Provider Entity.

Step 203: After receiving the inquiring request, the EAC determines the service authority of the Service Subscriber Entity and the Service Provider Entity according to the ISR-ID the IAC-ID, respectively, and performs Step 204. Specifically, the Step 203 is as follows.

First, the EAC judges validity of the IAC-ID and the ISR-ID, i.e., judges whether the period of validity for the IAC-ID and the ISR-ID expires; then, the EAC searches in the ESD to determine whether the subscription information of the Service Subscriber Entity contains identification information of the Service Provider Entity, so as to judge whether the Service Subscriber Entity has subscribed for the service provided by the Service Provider Entity; if the period of validity does not expire and the Service Subscriber Entity has subscribed for the service, the EAC is authorized to perform the following steps.

Step 204: A derived key for security communication between the Service Subscriber Entity and the Service Provider Entity is calculated.

First, the EAC finds out the key derivation rule information of the subscribed service in the subscription information of the Service Subscriber Entity from ESD. The service subscription information includes the key. derivation rule information of the service, key generation algorithm, and key length; the EAC further finds out the key generation algorithm supported by the Service Subscriber Entity in the subscription information. It is noted that the key generation algorithm supported by the Service Subscriber Entity may be informed to the EAC when the Service Subscriber Entity registers in the network, e.g., during booting, or stored in the ESD when the Service Subscriber Entity subscribes the network and then informed by the ESD to the EAC. Of course, the Service Subscriber Entity may inform the Service Provider Entity of the key generation algorithm, and then the Service Provider Entity may inform the EAC of the key generation algorithm in the inquiring message.

It is noted that the key derivation rule information may also be carried in the inquiring request from the Service Provider Entity.

Then, the EAC matches the key derivation rule information to the algorithms supported by the Service Subscriber Entity, including the algorithm to be used, the length of the calculated derived key, so as to select the derived key calculation algorithm denoted by KSx.

The EAC calculates the derived key using the selected calculation algorithm and the shared key shared between the Service Subscriber Entity and the EAC. The parameters for calculating the derived key further include the Private identity (PID) of the Service Subscriber Entity and the Unified identity (UID) of the Service Provider Entity. The derived key calculation algorithm may be denoted as: K-SSP/SP = KSx (Kss / Kssp, UID, PID, etc.).

Step 205: The EAC sends the calculated derived key in an inquiring response message to the Service Provider Entity. The sending procedure is encrypted and protected using the shared key shared between the Service Provider Entity and the EAC. After receiving the inquiring response message, the Service Provider Entity decrypts the message using the shared key to acquire the derived key.

Step 206: Meanwhile, the Service Subscriber Entity searches for the key derivation rule information of the subscribed service. The Service Subscriber Entity matches the key derivation rule information with the locally supported algorithms to select the same derived key generation algorithm with the EAC. The matching principle used by the Service Subscriber Entity is the same with the EAC. The Service Subscriber Entity calculates a derived key using the same input parameters and the selected derived key generation algorithm.

It is noted that the key derivation rule information of the subscribed service that is used by the Service Subscriber Entity may be sent by the network side to the Service Subscriber Entity when the Service Subscriber Entity requests the service to the Service Provider Entity. The key derivation rule information may also be issued by the network side by other means, for example, by short message service (SMS), etc. Of course, the key derivation rule information may also be previously stored in the Service Subscriber Entity.

It is noted that, in Step 206, the Service Subscriber Entity calculates the derived key Ks independently of the network side. Therefore, Step 206 may also be executed at any previous steps.

Step 207: after the derived key is generated, the Service Subscriber Entity and the Service Provider Entity can perform mutual authentication and secure the communication between them using the derived key. The derived key is equivalent to a shared key between the Service Subscriber Entity and the Service Provider Entity.

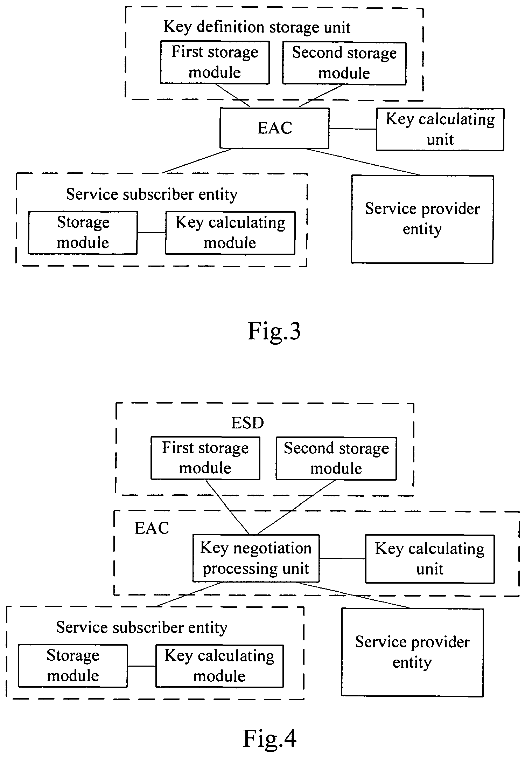

Accordingly, the present invention further provides a system for negotiating a communication key shared between a Service Subscriber Entity and a Service Provider Entity. As shown in Figure 3, the system includes:
a key derivation rule information storage unit, adapted to store key derivation rule information corresponding to various services provided by the Service Provider Entity or key generation algorithms supported by the Service Subscriber Entity;
a key calculating unit, adapted to calculate a first derived key for security communication between the Service Subscriber Entity and the Service Provider Entity;
a Service Provider Entity, adapted to send an inquiring request for the service requested by the Service Subscriber Entity to the EAC, after receiving a service request from the Service Subscriber Entity;
an EAC, connected to the key derivation rule information storage unit and the key calculating unit, and adapted to read the key derivation rule information corresponding to the requested service from the key derivation rule information storage unit and provide the information to the key calculating unit in response to the inquiring request from the Service Provider Entity, and adapted to receive the first derived key calculated by the key calculating unit and provide the first derived key to the Service Provider Entity; and
a Service Subscriber Entity, adapted to generate a second derived key using the key generation algorithm supported by the Service Subscriber Entity, based on the key derivation rule information corresponding to the requested service.

Specifically, the key derivation rule information storage unit includes:
a first storage module, adapted to store the key derivation rule information corresponding to the services provided by the Service Provider Entity;
the key derivation rule information storage unit further includes a second storage module, adapted to store the key generation algorithms supported by the Service Subscriber Entity.

Specifically, the Service Subscriber Entity includes:
a key calculating module, adapted to generate a second derived key using the key generation algorithm supported by the Service Subscriber Entity based on the key derivation rule information corresponding to the requested service.

The Service Subscriber Entity may further include:
a storage module, adapted to store the key derivation rule information corresponding to the service subscribed by the Service Subscriber Entity and provide the key derivation rule information to the key calculating module.

It is understood that the key derivation rule information storage unit may be in the ESD and the key calculating unit may be in the EAC.

As shown in Figure 4, the EAC may include:
a key calculating unit, adapted to calculate a derived key for security communication between a Service Subscriber Entity and a Service Provider Entity;
a key negotiation processing unit, adapted to read the key derivation rule information corresponding to the requested service from an entity subscription database (ESD) and provide the information to the key calculating unit in response to the inquiring request from the Service Subscriber Entity, and adapted to receive the derived key calculated by the key calculating unit and provide the derived key to the Service Provider Entity.

It can be seen from the above that, by using GAA architecture to negotiate the derived keys shared between a Service Subscriber Entity and a Service Provider Entity, the present invention may calculate proper keys according to the security requirement of the Service Provider Entity and the key generation algorithm supported by the Service Subscriber Entity.

While the present invention has been illustrated and described in conjunction with some exemplary embodiments, the present invention is not limited to these. Those skilled in the art should recognize that various variations and modifications may be made without departing from the scope of the present invention as defined by the accompanying claims.

## Claims

1. A method for negotiating a key shared between a service subscriber entity and a service provider entity, comprising:
by the service provider entity, after receiving a service request message from the service subscriber entity, sending (202) an inquiring request message to an Entity Authentication Center (EAC), the inquiring request comprising an identity of the service subscriber entity and an identity of the service provider entity;
by the EAC, after receiving the inquiring request message, obtaining (204) a key derivation rule information corresponding to a requested service, the key derivation rule information comprising key generation algorithm and key length, calculating a first derived key based on the obtained key derivation rule information using a first calculation method, and sending (205) the calculated first derived key to the service provider entity;
by the service subscriber entity, calculating (206) a second derived key using the same method as the first calculation method, based on the key derivation rule information corresponding to the requested service.

2. The method according to claim 1, wherein, the inquiring request message includes the identity of the service subscriber entity;
the method further comprising:
by the EAC, after receiving the inquiring request message, determining the service authority of the service subscriber entity and the service provider entity, according to the identity of the service subscriber entity and the identity of the service provider entity in the inquiring request message.

3. The method according to claim 2, wherein, the determining the service authority comprises:
judging validity of the identity of the service subscriber entity and the identity of the service provider entity;
judging whether the service subscriber entity has subscribed for the service provided by the service provider entity.

4. The method according to claim 1, wherein, the first calculation method comprises:
by the EAC, obtaining key generation algorithms supported by the service subscriber entity;
by the EAC, matching the key derivation rule information to the key generation algorithms supported by the service subscriber entity, to select an appropriate derived key generation algorithm; and
by the EAC, calculating the first derived key using the selected derived key generation algorithm and a key shared between the service subscriber entity and the EAC.

5. The method according to claim 4, wherein, parameters that are used to calculate the first derived key further comprise: Private identity (PID) of the service subscriber entity and Unified identity (UID) of the service provider entity.

6. The method according to claim 4, wherein, the key generation algorithms supported by the service subscriber entity are notified to the EAC when the service subscriber entity registers in the network, or stored in an Entity Subscription Database (ESD) when the service subscriber entity subscribes the network and then obtained from the ESD by the EAC.

7. The method according to claim 1, wherein, the key derivation rule information that is used to calculate the second derived key is sent by the network side to the service subscriber entity in response to a request of the service subscriber entity or previously stored in the service subscriber entity.

8. The method according to claim 1, wherein, the obtaining the key derivation rule information corresponding to the service comprises:
by the EAC, obtaining the key derivation rule information corresponding to the service requested by the service subscriber entity from the received inquiring request or searching in the ESD using the identity of the service provider entity carried in the received inquiring request.

9. A system for negotiating a key shared between a service subscriber entity and a service provider entity, comprising:
a key derivation rule information storage unit, adapted to store key derivation rule information corresponding to various services provided by the service provider entity, the key derivation rule information comprising key generation algorithm and key length;
a key calculating unit, adapted to generate a first derived key based on the key derivation rule information corresponding to requested service;
a service provider entity, adapted to send an inquiring request for the service requested by the service subscriber entity to the EAC, in response to a service request from the service subscriber entity;
an Entity Authentication Center (EAC), adapted to read the key derivation rule information from the key derivation rule information storage unit and provide the key derivation rule information to the key calculating unit, and adapted to receive the first derived key calculated by the key calculating unit and provide the first derived key to the service provider entity; and
a service subscriber entity, adapted to generate a second derived key based on the key derivation rule information.

10. The system according to claim 9, wherein, the key derivation rule information storage unit comprises:
a first storage module, adapted to store the key derivation rule information corresponding to the services provided by the service provider entity; and
a second storage module, adapted to store key generation algorithms supported by the service subscriber entity.

11. The system according to claim 9, wherein, the service subscriber entity comprises:
a key calculating module, adapted to generate a second derived key using the key generation algorithm supported by the service subscriber entity based on the key derivation rule information corresponding to the requested service; and
a storage module, adapted to store the key derivation rule information corresponding to the service subscribed by the service subscriber entity and provide the key derivation rule information to the key calculating module.

12. The system according to claim 9, wherein, the key derivation rule information storage unit is located in the ESD, and the key calculating unit is located in the EAC.

13. An Entity Authentication Center (EAC), **characterized by** the EAC comprising:
a key calculating unit, adapted to calculate a derived key based on key derivation rule information corresponding to a service requested to the service provider entity, the key derivation rule information comprising key generation algorithm and key length; and
a key negotiation processing unit, adapted to obtain the key derivation rule information corresponding to the requested service and provide the derivation rule information to the key calculating unit, and adapted to receive the derived key calculated by the key calculating unit and provide the derived key to the service provider entity.

14. A service subscriber entity, comprising
a service request module, adapted to send a service request to a service provider entity, **characterized by** the service subscriber entity further comprising:
a key derivation rule information obtaining module, adapted to obtain the key derivation rule information corresponding to a requested service, the key derivation rule information comprising key generation algorithm and key length; and
a key calculating module, adapted to generate a derived key based on the key derivation rule information.

## Patentansprüche

1. Verfahren zum Aushandeln eines Schlüssels, der zwischen einer Dienstteilnehmer-Entität und einer Dienstanbieter-Entität geteilt wird, umfassend:
Senden (202), durch die Dienstanbieter-Entität nach Empfangen einer Dienstanforderungsnachricht von der Dienstteilnehmer-Entität, einer aufragenden Anforderungsnachricht an ein Entität-Authentifizierungszentrum (EAC), wobei die anfragende Anforderung eine Identität der Dienstteilnehmer-Entität und eine Identität der Dienstanbieter-Entität umfasst;
Erlangen (204), durch das EAC nach Empfangen der aufragenden Anforderungsnachricht, einer Schlüsselableitungsregel-Information korrespondierend mit einem angeforderten Dienst, wobei die Schlüsselableitungsregel-Information einen Schlüsselerzeugungsalgorithmus und eine Schlüssellänge umfasst, Berechnen eines ersten abgeleiteten Schlüssels basierend auf der erlangten Schlüsselableitungsregel-Information unter Verwendung eines ersten Berechnungsverfahrens und Senden (205) des berechneten ersten abgeleiteten Schlüssels an die Dienstanbieter-Entität;
Berechnen (206), durch die Dienstteilnehmer-Entität, eines zweiten abgeleiteten Schlüssels unter Verwendung des gleichen Verfahrens wie das erste Berechnungsverfahren basierend auf der Schlüsselableitungsregel-Information korrespondierend mit dem angeförderten Dienst.

2. Verfahren nach Anspruch 1, wobei die anfragende Anforderungsnachricht die Identität der Dienstteilnehmer-Entität enthält;
das Verfahren ferner umfassend:
Bestimmen, durch das EAC nach Empfangen der aufragenden Anforderungsnachricht, der Dienstautorität der Dienstteilnehmer-Entität und der Dienstanbieter-Entität gemäß der Identität der Dienstteilnehmer-Entität und der Identität der Dienstanbieter-Entität in der aufragenden Anforderungsnachricht.

3. Verfahren nach Anspruch 2, wobei das Bestimmten der Dienstautorität umfasst:
Beurteilen der Gültigkeit der Identität der Dienstteilnehmer-Entität und der Identität der Dienstanbieter-Entität;
Beurteilen, ob die Dienstteilnehmer-Entität den von der Dienstanbieter-Entität angebotenen Dienst abonniert hat.

4. Verfahren nach Anspruch 1, wobei das erste Berechnungsverfahren umfasst:
Erlangen, durch das EAC, von Schlüsselerzeugungsalgorithmen, die von der Dienstteilnehmer-Entität unterstützt werden;
Anpassen, durch das EAC, der Schlüsselableitungsregel-Information an die von der Dienstteilnehmer-Entität unterstützten Schlüsselerzeugungsalgorithmen, um einen geeigneten abgeleiteten Schlüsselerzeugungsalgorithmus auszuwählen; und
Berechnen, durch das EAC, des ersten abgeleiteten Schlüssels unter Verwendung des ausgewählten abgeleiteten Schlüsselerzeugungsalgorithmus und eines zwischen der Dienstteilnehmer-Entität und dem EAC geteilten Schlüssels.

5. Verfahren nach Anspruch 4, wobei die Parameter, die zum Berechnen des ersten abgeleiteten Schlüssels verwendet werden, ferner umfassen: Private Identität (PID) der Dienstteilnehmer-Entität und Vereinheitlichte Identität (UID) der Dienstanbieter-Entität.

6. Verfahren nach Anspruch 4, wobei die von der Dienstteilnehmer-Entität unterstützen Schlüsselerzeugungsalgorithmen an das EAC berichtet werden, wenn die Dienstteilnehmer-Entität in dem Netzwerk registriert, oder in einer Entität-Abonnementsdatenbank (ESD) gespeichert werden, wenn die Dienstteilnehmer-Entität das Netzwerk abonniert, und dann durch das EAC von der ESD erlangt werden.

7. Verfahren nach Anspruch 1, wobei die Schlüsselableitungsregel-Information, die zum Berechnen des zweiten abgeleiteten Schlüssels verwendet wird, als Reaktion auf eine Anforderung der Dienstteilnehmer-Entität von der Netzwerkseite an die Dienstteilnehmer-Entität gesandt wird oder vorher in der Dienstteilnehmer-Entität gespeichert wird.

8. Verfahren nach Anspruch 1, wobei das Erlangen der Schlüsselableitungsregel-Information korrespondierend mit dem Dienst umfasst:
Erlangen, durch das EAC, der Schlüsselableitungsregel-Information korrespondierend mit dem Dienst, der von der Dienstteilnehmer-Entität angefordert wird, aus der empfangenen anfragenden Anforderung oder Suchen in der ESD unter Verwendung der Identität der Dienstanbieter-Entität, die in der empfangenen aufragenden Anforderung getragen wird.

9. System zum Aushandeln eines Schlüssels, der zwischen einer Dienstteilnehmer-Entität und einer Dienstanbieter-Entität geteilt wird, umfassend:
eine Schlüsselableitungsregel-Information-Speichereinheit, angepasst zum Speichern einer Schlüsselableitungsregel-Information korrespondierend mit verschiedenen Dienten, die von der Dienstanbieter-Entität angeboten werden, wobei die Schlüsselableitungsregel-Information einen Schlüsselerzeugungsalgorithmus und eine Schlüssellänge umfasst;
eine Schlüsselberechnungseinheit, angepasst zum Erzeugen eines ersten abgeleiteten Schlüssels basierend auf der Schlüsselableitungsregel-Information korrespondierend mit dem angeforderten Dienst;
eine Dienstanbieter-Entität, angepasst zum Senden einer aufragenden Anforderung des von der Dienstteilnehmer-Entität angeforderten Dienstes an das EAC als Reaktion auf eine Dienstanforderung von der Dienstteilnehmer-Entität;
ein Entität-Authentifizierungszentrum (EAC), angepasst zum Lesen der Schlüsselableitungsregel-Information aus der Schlüsselableitungsregel-Information-Speichereinheit und Bereitstellen der Schlüsselableitungsregel-Information der Schlüsselberechnungseinheit und angepasst zum Empfangen des ersten abgeleiteten Schlüssels, der von der Schlüsselberechnungseinheit berechnet wird, und Bereitstellen des ersten abgeleiteten Schlüssels der Dienstanbieter-Entität; und
eine Dienstteilnehmer-Entität, angepasst zum Erzeugen eines zweiten abgeleiteten Schlüssels basierend auf der Schlüsselableitungsregel-Information.

10. System nach Anspruch 9, wobei die Schlüsselableitungsregel-Information-Speichereinheit umfasst:
ein erstes Speichermodul, angepasst zum Speichern der Schlüsselableitungsregel-Information korrespondierend mit den Diensten, die von der Dienstanbieter-Entität angeboten werden; und
ein zweites Speichermodul, angepasst zum Speichern von Schlüsselerzeugungsalgorithmen, die von der Dienstteilnehmer-Entität unterstützt werden.

11. System nach Anspruch 9, wobei die Dienstteilnehmer-Entität umfasst:
ein Schlüsselberechnungsmodul, angepasst zum Erzeugen eines zweiten abgeleiteten Schlüssels unter Verwendung der Schlüsselerzeugungsalgorithmen, die von der Dienstteilnehmer-Entität unterstützt werden, basierend auf der Schlüsselableitungsregel-Information korrespondierend mit dem angeforderten Dienst; und
ein Speichermodul, angepasst zum Speichern der Schlüsselableitungsregel-Information korrespondierend mit dem Dienst, der von der Dienstteilnehmer-Entität abonniert wird, und Bereitstellen der Schlüsselableitungsregel-Information dem Schlüsselberechnungsmodul.

12. System nach Anspruch 9, wobei die Schlüsselableitungsregel-Information-Speichereinheit in der ESD angeordnet ist und die Schlüsselberechnungseinheit in dem EAC angeordnet ist.

13. Entität-Authentifizierungszentrum (EAC), **dadurch gekennzeichnet, dass** das EAC umfasst:
eine Schlüsselberechnungseinheit, angepasst zum Berechnen eines abgeleiteten Schlüssels basierend auf einer Schlüsselableitungsregel-Information korrespondierend mit einem von der Dienstanbieter-Entität angeforderten Dienst, wobei die Schlüsselableitungsregel-Information einen Schlüsselerzeugungsalgorithmus und eine Schlüssellänge umfasst; und
eine Schlüsselaushandlung-Verarbeitungseinheit, angepasst zum Erlangen der Schlüsselableitungsregel-Information korrespondierend mit dem angeforderten Dienst und Bereitstellen den Ableitungsregel-Information der Schlüsselberechnungseinheit, und angepasst zum Empfangen des abgeleiteten Schlüssels, der von der Schlüsselberechnungseinheit berechnet wird, und Bereitstellen des abgeleiteten Schlüssels der Dienstanbieter-Entität.

14. Dienstteilnehmer-Entität, umfassend:
ein Dienstanfordemngsmodul, angepasst zum Senden einer Dienstanforderung an eine Dienstanbieter-Entität,
**dadurch gekennzeichnet, dass** die Dienstteilnehmer-Entität ferner umfasst:
ein Schlüsselableitungsregel-Information-Erlangungsmodul, angepasst zum Erlangen der Schlüsselableitungsregel-Information korrespondierend mit einem angeforderten Dienst, wobei die Schlüsselableitungsregel-Information einen Schlüsselerzeugungsalgorithmus und eine Schlüssellänge umfasst; und
ein Schlüsselberechnungsmodul, angepasst zum Erzeugen eines abgeleiteten Schlüssels basierend auf der Schlüsselableitungsregel-Information.

## Revendications

1. Procédé de négociation d'une clé partagée entre une entité d'abonné à un service et une entité fournisseur de services, comprenant :
l'envoi (202), par l'entité fournisseur de services, après avoir reçu un message de demande de service provenant de l'entité d'abonné à un service, d'un message de demande de requête à un centre d'authentification d'entités (EAC), la demande de requête comprenant une identité de l'entité d'abonné à un service et une identité de l'entité fournisseur de services,
par le centre EAC, après avoir reçu le message de demande de requête, la récupération (204) d'informations de règles de déduction de clé correspondant à un service demandé, les informations de règles de déduction de clé comprenant un algorithme de génération de clé et une longueur de clé ; le calcul d'une première clé déduite fondée sur les informations de règles de déduction de clé obtenues en utilisant un premier procédé de calcul ; et l'envoi (205) de la première clé déduite calculée à l'entité fournisseur de services,
le calcul (206), par l'entité d'abonné à un service, d'une seconde clé déduite en utilisant le même procédé que le premier procédé de calcul sur la base des informations de règles de déduction de clé correspondant au service demandé.

2. Procédé selon la revendication 1, dans lequel le message de demande de requête inclut l'identité de l'entité d'abonné à un service,
le procédé comprenant en outre :
la détermination, par le centre EAC, après avoir reçu le message de demande de requête, de l'autorité de service de l'entité d'abonné à un service et de l'entité fournisseur de services, en fonction de l'identité de l'entité d'abonné à un service et de l'identité de l'entité fournisseur de services dans le message de demande de requête.

3. Procédé selon la revendication 2, dans lequel la détermination de l'autorité de service comprend :
l'évaluation de la validité de l'identité de l'entité d'abonné à un service et de l'identité de l'entité fournisseur de services,
l'évaluation de ce que l'entité d'abonné à un service a souscrit ou non au service procuré par l'entité fournisseur de services.

4. Procédé selon la revendication 1, dans lequel le premier procédé de calcul comprend :
la récupération, par le centre EAC, d'algorithmes de génération de clé pris en charge par l'entité d'abonné à un service,
la mise en correspondance, par le centre EAC, des informations de règles de déduction de clé avec les algorithmes de génération de clé pris en charge par l'entité d'abonné à un service, dans le but de sélectionner un algorithme approprié de génération de clé déduite, et
le calcul, par le centre EAC, de la première clé déduite en utilisant l'algorithme sélectionné de génération de clé déduite et d'une clé partagée entre l'entité d'abonné à un service et le centre EAC.

5. Procédé selon la revendication 4, dans lequel des paramètres qui sont utilisés pour calculer la première clé déduite comprennent en outre : l'identité privée (PID) de l'entité d'abonné à un service et l'identité unifiée (UID) de l'entité fournisseur de services.

6. Procédé selon la revendication 4, dans lequel les algorithmes de génération de clé pris en charge par l'entité d'abonné à un service sont notifiés au centre EAC lorsque l'entité d'abonné à un service s'enregistre dans le réseau, ou bien sont stockés dans une base de données de souscription d'entités (ESD) lorsque l'entité d'abonné à un service souscrit au réseau, puis sont obtenus par le centre EAC à partir de la base de données ESD.

7. Procédé selon la revendication 1, dans lequel les informations de règles de déduction de clé qui sont utilisées pour calculer la seconde clé déduite sont envoyées par le côté réseau à l'entité d'abonné à un service en réponse à une demande de l'entité d'abonné à un service, ou bien sont stockées au préalable dans l'entité d'abonné à un service.

8. Procédé selon la revendication 1, dans lequel la récupération des informations de règles de déduction de clé correspondant au service comprend :
par le centre EAC, la récupération des informations de règles de déduction de clé correspondant au service demandé par l'entité d'abonné à un service à partir de la demande de requête reçue, ou bien la recherche dans la base de données ESD en utilisant l'identité de l'entité fournisseur de services transportée dans la demande de requête reçue.

9. Système de négociation d'une clé partagée entre une entité d'abonné à un service et une entité fournisseur de services, comprenant :
une unité de stockage d'informations de règles de déduction de clé conçue pour stocker des informations de règles de déduction de clé correspondant à divers services procurés par l'entité fournisseur de services, les informations de règles de déduction de clé comprenant un algorithme de génération de clé et une longueur de clé,
une unité de calcul de clé conçue pour générer une première clé déduite fondée sur les informations de règles de déduction de clé correspondant au service demandé,
une entité fournisseur de services conçue pour envoyer au centre EAC une demande de requête pour le service demandé par l'entité d'abonné à un service, en réponse à une demande de service provenant de l'entité d'abonné à un service,
un centre d'authentification d'entités (EAC) conçu pour lire les informations de règles de déduction de clé provenant de l'unité de stockage d'informations de règles de déduction de clé et pour fournir les informations de règles de déduction de clé à l'unité de calcul de clé ; et conçu pour recevoir la première clé déduite calculée par l'unité de calcul de clé et pour fournir la première clé déduite à l'entité fournisseur de services, et
une entité d'abonné à un service conçue pour générer une seconde clé déduite fondée sur les informations de règles de déduction de clé.

10. Système selon la revendication 9, dans lequel l'unité de stockage d'informations de règles de déduction de clé comprend :
un premier module de stockage conçu pour stocker les informations de règles de déduction de clé correspondant aux services procurés par l'entité fournisseur de services, et
un second module de stockage conçu pour stocker des algorithmes de génération de clé pris en charge par l'entité d'abonné à un service.

11. Système selon la revendication 9, dans lequel l'entité d'abonné à un service comprend :
un module de calcul de clé conçu pour générer une seconde clé déduite en utilisant l'algorithme de génération de clé pris en charge par l'entité d'abonné à un service sur la base des informations de règles de déduction de clé correspondant au service demandé, et
un module de stockage conçu pour stocker les informations de règles de déduction de clé correspondant au service souscrit par l'entité d'abonné à un service et pour fournir les informations de règles de déduction de clé au module de calcul de clé.

12. Système selon la revendication 9, dans lequel l'unité de stockage d'informations de règles de déduction de clé est située dans la base de données ESD, et l'unité de calcul de clé est située dans le centre EAC.

13. Centre d'authentification d'entités (EAC) **caractérisé en ce que** le centre EAC comprend :
une unité de calcul de clé conçue pour calculer une clé déduite sur la base d'informations de règles de déduction de clé correspondant à un service demandé à l'entité fournisseur de services, les informations de règles de déduction de clé comprenant un algorithme de génération de clé et une longueur de clé, et
une unité de traitement de négociation de clé conçue pour récupérer les informations de règles de déduction de clé correspondant au service demandé et pour fournir les informations de règles de déduction à l'unité de calcul de clé ; et conçue pour recevoir la clé déduite calculée par l'unité de calcul de clé et pour fournir la clé déduite à l'entité fournisseur de services.

14. Entité d'abonné à un service, comprenant :
un module de demande de service conçu pour envoyer une demande de service à une entité fournisseur de services,
**caractérisée en ce que** l'entité d'abonné à un service comprend en outre :
un module de récupération d'informations de règles de déduction de clé conçu pour récupérer les informations de règles de déduction de clé correspondant un service demandé, les informations de règles de déduction de clé comprenant un algorithme de génération de clé et une longueur de clé, et
un module de calcul de clé conçu pour générer une clé déduite fondée sur les informations de règles de déduction de clé.
